**Europäisches Patentamt**

**European Patent Office**

**Office européen des brevets**

(19)

(11) Veröffentlichungsnummer: **0 264 601**
**A2**

(12)

# EUROPÄISCHE PATENTANMELDUNG

(21) Anmeldenummer: **87113069.6**

(22) Anmeldetag: **08.09.87**

(51) Int. Cl.⁴: **B29C 45/17**

(30) Priorität: **24.09.86 DE 3632449**

(43) Veröffentlichungstag der Anmeldung:
**27.04.88 Patentblatt 88/17**

(84) Benannte Vertragsstaaten:
**AT CH DE FR GB IT LI NL**

(71) Anmelder: **Hehl, Karl**
**Arthur-Hehl-Strasse 32**
**D-7298 Lossburg-1(DE)**

(72) Erfinder: **Hehl, Karl**
**Arthur-Hehl-Strasse 32**
**D-7298 Lossburg-1(DE)**

(74) Vertreter: **Mayer, Friedrich, Dr.**
**Patentanwälte Dr. Mayer & Frank Westliche 24**
**D-7530 Pforzheim(DE)**

(54) **Kunststoff-Spritzgiessmaschine mit zugehörigem Computer und Datensichtgerät.**

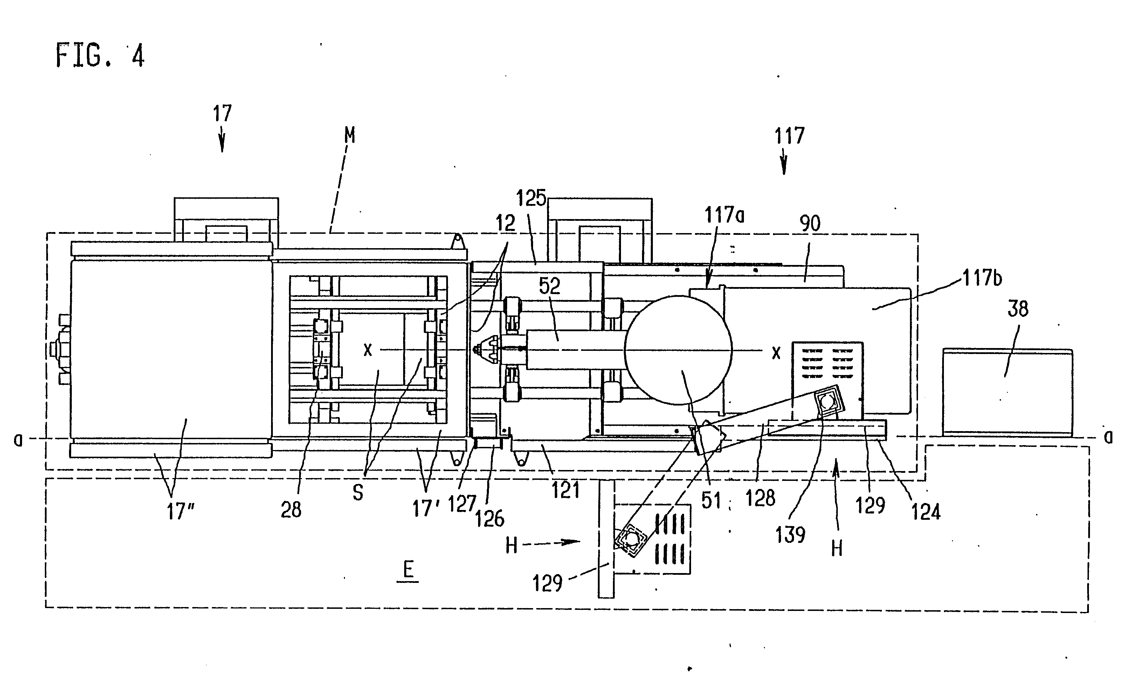

(57) Das mit den zugehörigen Eingabetastaturen eine Bewegungseinheit bildende und vom Computer räumlich getrennte Datensichtgerät (H) ist mittels eines horizontalen Schwenkarmes (128) aus einer im Bedienungsbereich (E) befindlichen Gebrauchsposition in die Stellfläche (M) der Spritzgießmaschine in eine Ruheposition einschwenkbar. Der Schwenkarm (128) ist auf einer an der bedienungsseitigen Wand des Maschinenfußes angeordneten Trägersäule schwenkbar gelagert. Dadurch ergibt sich eine variable und bedienungsfreundlichere Einordnung der Eingabetastaturen und des Datensichtgerätes in den Bedienungsplatz der Spritzgießmaschine (Fig. 4).

FIG. 4

EP 0 264 601 A2

## Kunststoff-spritzgießmaschine mit zugehörigem Computer und Datensichtgerät.

Die Erfindung bezieht sich auf eine Spritzgießmaschine entsprechend dem Oberbegriff des Patentanspruches 1.

Bei einer bekannten Spritzgießmaschine dieser Art sind das Datensichtgerät und die Eingabetastaturen vom Computer der Spritzgießmaschine räumlich getrennt. Dies ist gleichbedeutend mit der Auflösung der üblichen, durch den Schaltschrank mit seinem Datensichtgerät und den Eingabetastaturen bestehenden baulichen Einheit. Die Befreiung des Schaltschrankes von den Eingabetastaturen hat unter anderem den Vorteil, daß der Computer im Schaltschrank hermetisch abgeschlossen werden kann (Multi-Microprozessorsystem mit Farbmonitor, Kunststoffe-Plastics 6/83). Hiervon ausgehend liegt der Erfindung die Aufgabe zugrunde, eine bekannte Spritzgießmaschine dieser Art in Richtung einer bedienungsfreundlichen Einordnung der Bedienungstastaturen und des Datensichtgerätes in einen Bedienungsplatz weiterzubilden, der im Bedienungsbereich (E in Fig. 4) etwa in Höhe des düsenseitigen Abschnittes des Plastifizierzylinders liegt. Dies soll in der Weise geschehen, daß einerseits sowohl die Eingabetastaturen des im nahen Sichtbereich befindlichen Datensichtgerätes als auch die 'manuelle Bedienungstastatur' (126) für einen direkten Eingriff in die Steuerung, z.B. bei Beseitigung von Störfällen vom Bedienungsplatz aus unmittelbar zugänglich sind und daß andererseits der Bedienungsbereich nach Betriebsende vom Datensichtgerät mit einem Handgriff befreit werden kann.

Diese Aufgabe wird erfindungsgemäß durch die im Kennzeichen des Patentanspruches 1 genannten Merkmale gelöst.

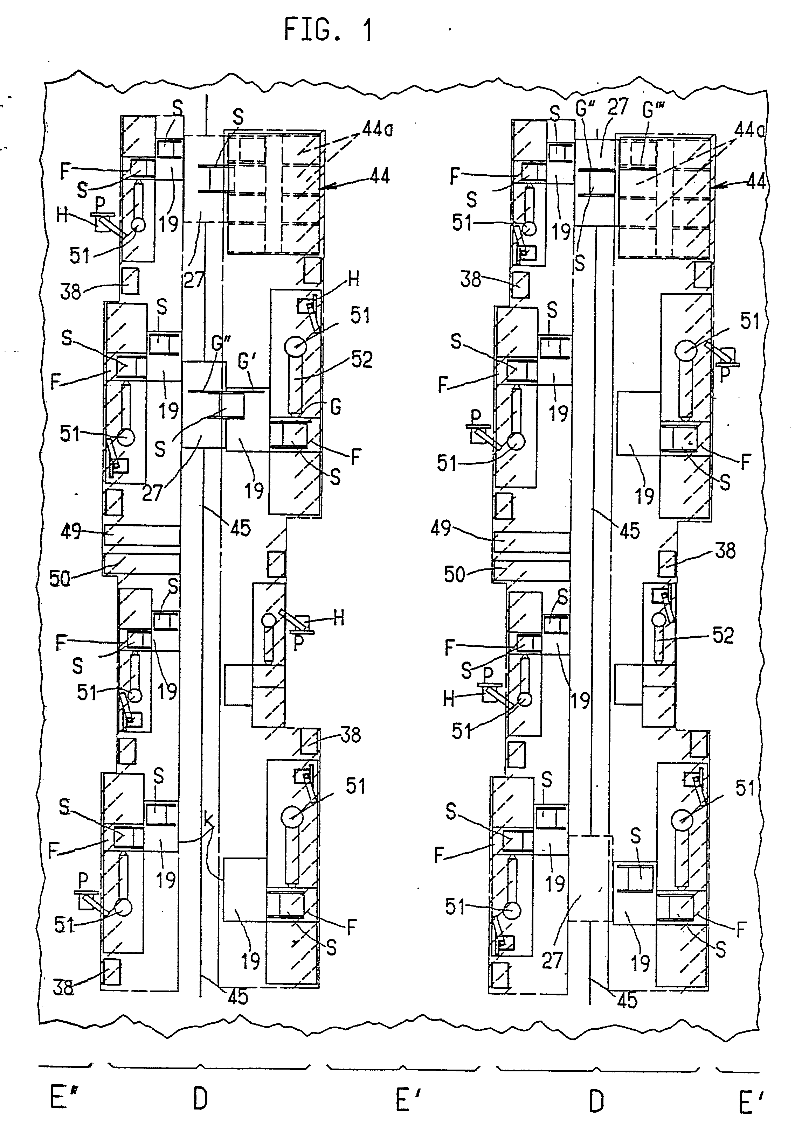

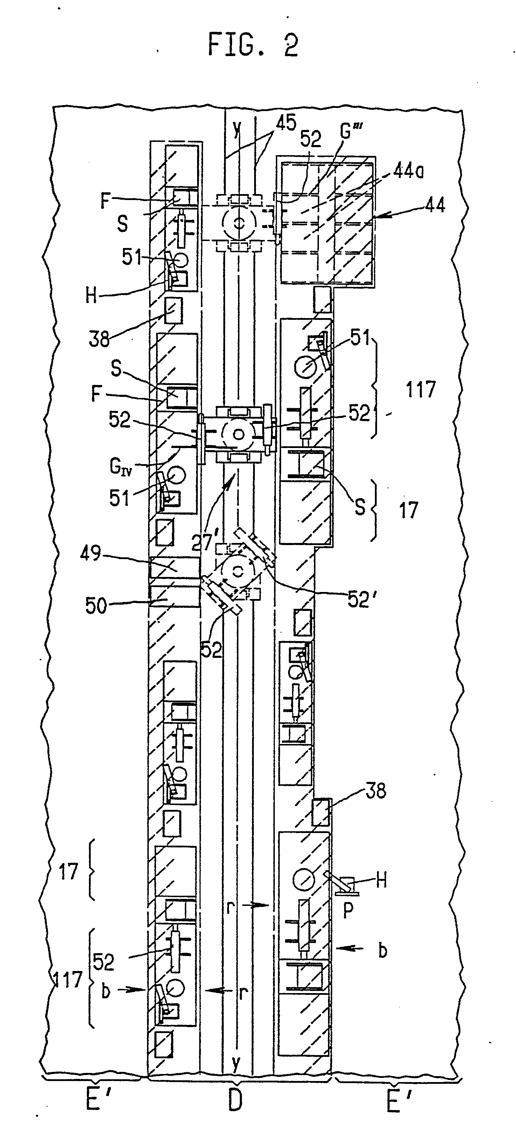

Bei einer solchen Ausbildung liegen zudem die grundsätzlichen Voraussetzungen dafür vor, daß der Gefahrenbereich (Grundriß des Stellplatzes M) und der Bedienungsbereich (E in Fig. 4) zu einer langgestreckten Gefahrenzone (D) und Bedienungsstraße (E' Fig. 1,2) unter relativ guter gegenseitiger Abgrenzung erweitert werden können, wenn gemäß einem der Patentansprüche 15 und 16 mehrere Spritzgießmaschinen mit einer gemeinsamen, ein Gießformdepot und ein Schienenfahrzeug umfassenden Gießformwechselvorrichtung beidseits der geradlinigen Bahn (Schienenbahn) des Schienenfahrzeuges spiegelsymmetrisch zueinander angeordnet sind.

In solchem Falle bilden die bedienungsseitigen vertikalen Wände (11a) der Maschinenfüße (11) der stirnseitig aneinandergereihten Spritzgießmaschinen in Verbindung mit den auf diesen vertikalen Wänden angeordneten Schiebern und Schutztüren eine mehr oder weniger geschlossene Abgrenzung zwischen der sich über die Länge der Schienenbahn erstreckenden Bedienungsstraße und dem die Schienenbahn als solche und die beidseits derselben spiegelsymmetrisch angeordneten Spritzgießmaschinen umfassenden Gefahrenbereich (vergl. hierzu die älteren Patentanmeldungen P 36 17 094.1; P 36 26 488.1).

Die Bedienungsstraßen können nach Betriebsende mit Räumgeräten bei relativ geringem Zeitaufwand gesäubert und aufgeräumt werden.

Nachstehend wird die Erfindung anhand der Zeichnung an einem Ausführungsbeispiel erläutert. Es zeigen:

Fig. 1 mehrere erfindungsgemäße Spritzgießmaschinen, die zu einer Spritzgießanlage gruppiert sind,

Fig. 2 die Variante einer Spritzgießanlage gemäß Fig. 1,

Fig. 3-5 die erfindungsgemäße Spritzgießmaschine in Seitenansicht, Draufsicht und Stirnansicht,

Fig. 6 das am Schwenkarm hängende Datensichtgerät einer Spritzgießmaschine in Vorderansicht in vergrößerter Darstellung,

Fig. 7 den Ausschnitt gemäß Fig. 8 in einer Ansicht aus A,

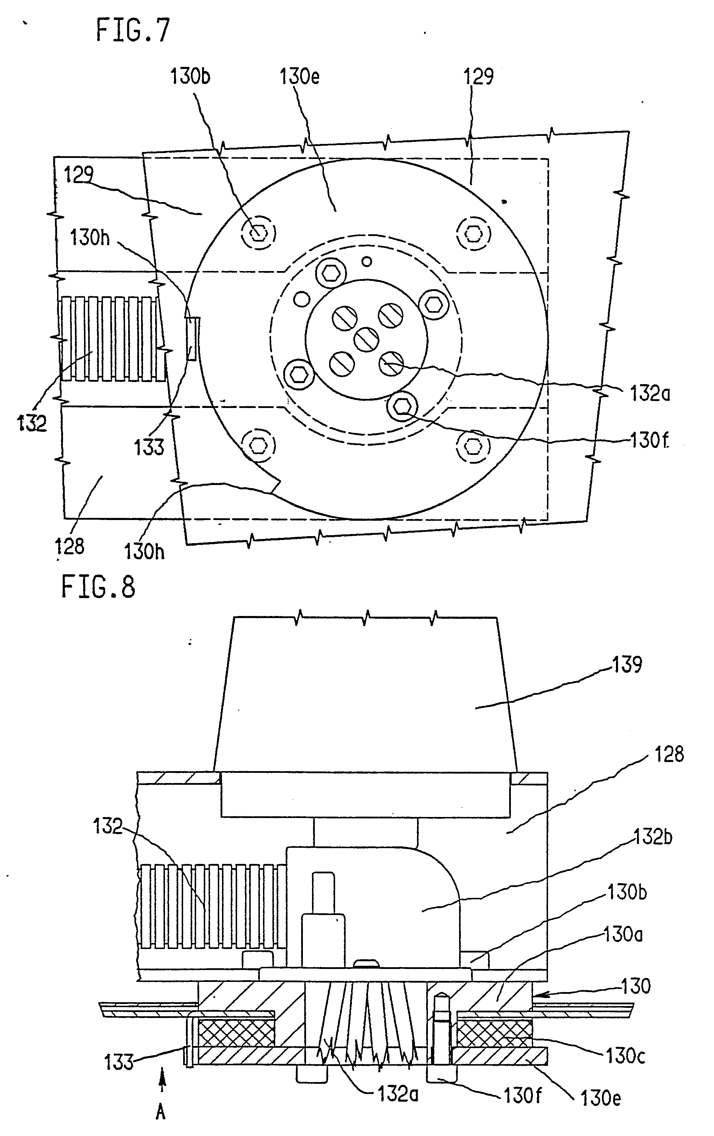

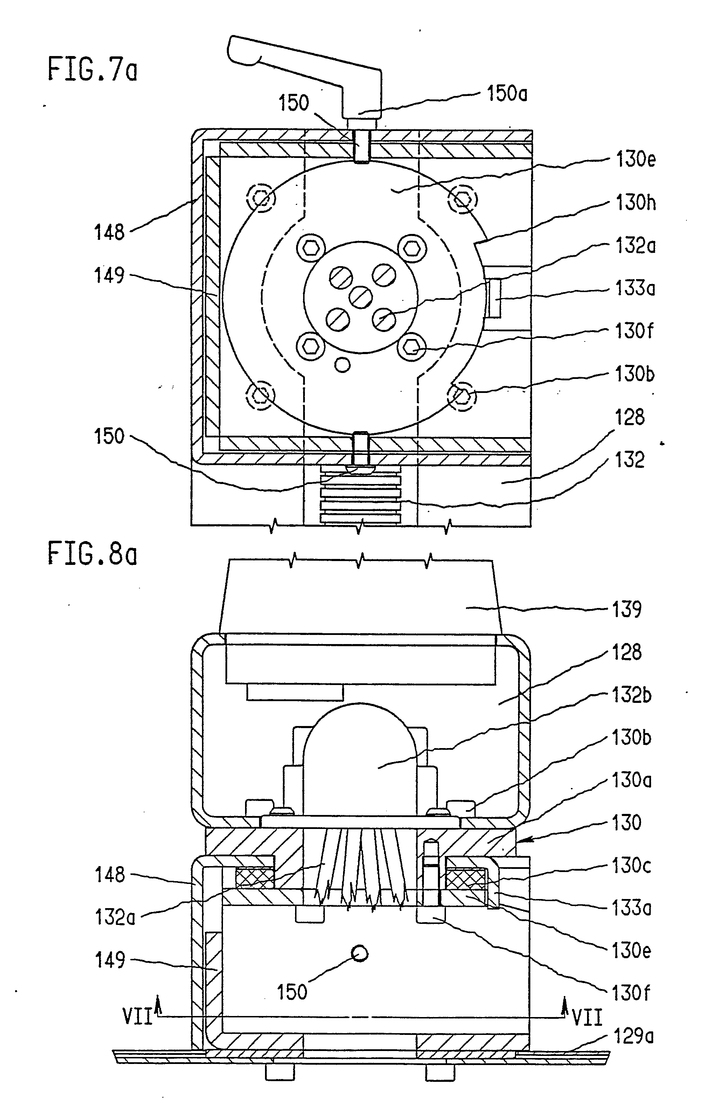

Fig. 7 a einen Schnitt nach Linie VII-VII von Fig. 8a,

Fig. 8 das freie Ende des Schwenkarmes mit Drehlager, geschnitten

Fig. 8a den Schwenkarm mit einer Dreh-Schwenk-Verbindung zum Datensichtgerät in einem durch die Drehachse des Drehlagers gehenden Vertikalschnitt,

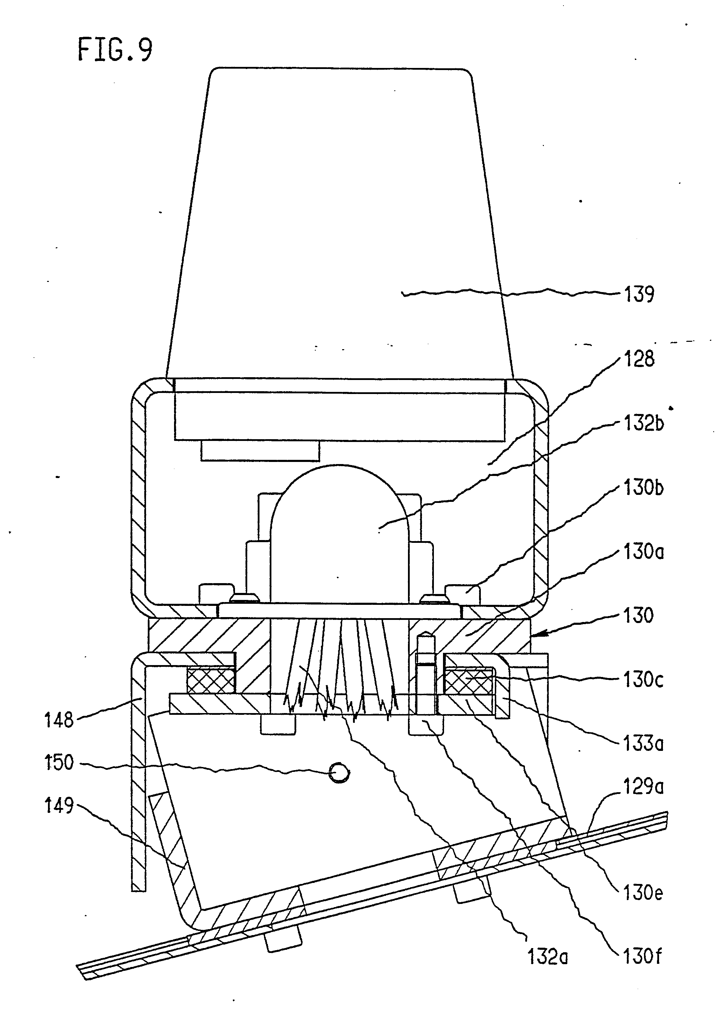

Fig. 9 die Anordnung gemäß Fig.8 bei verschwenktem Datensichtgerät,

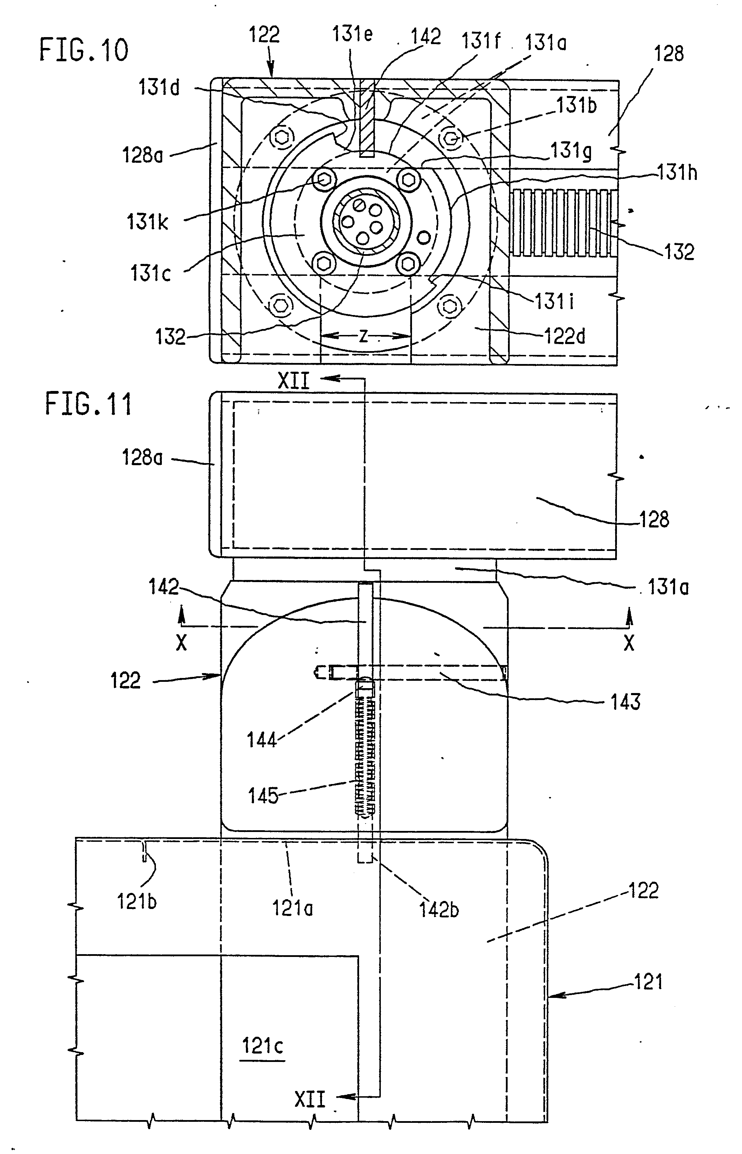

Fig. 10 einen Schnitt nach Linie X-X von Fig. 11,

Fig. 11 einen Ausschnitt aus dem Träger- und Schwenkarm der Spritzgießmaschine im Bereich des Drehlagers von der Bedienungsseite her gesehen,

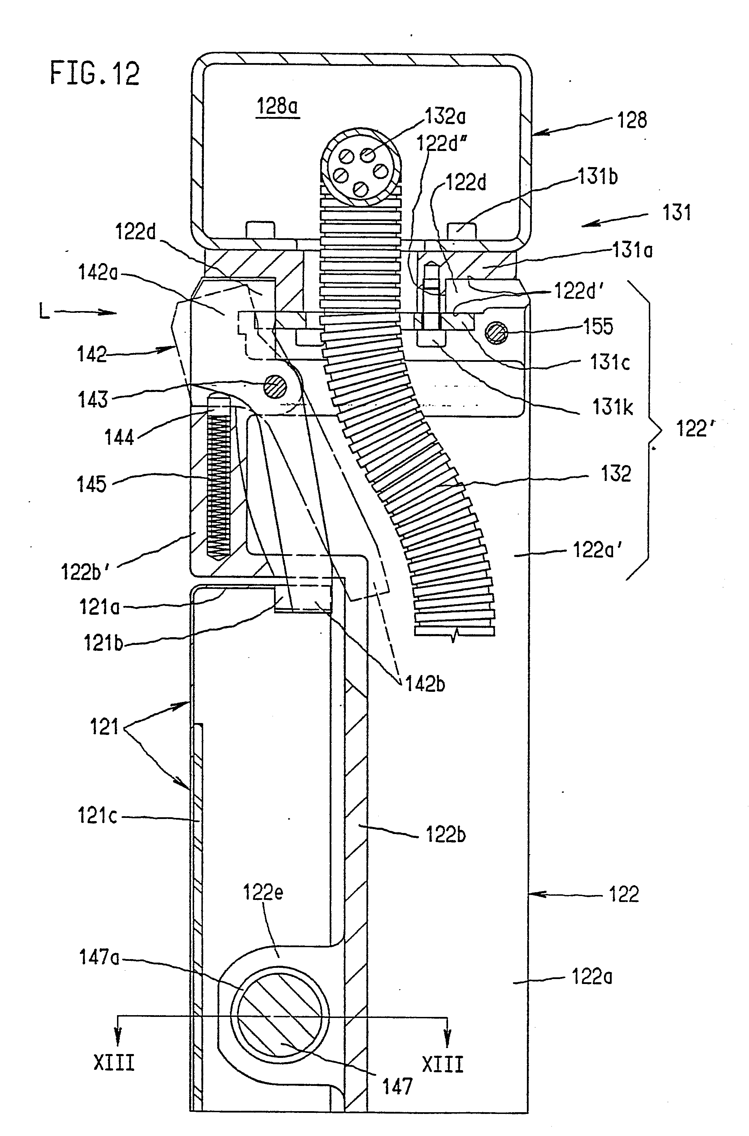

Fig. 12 einen Schnitt nach Linie XII-XII von Fig. 11 und

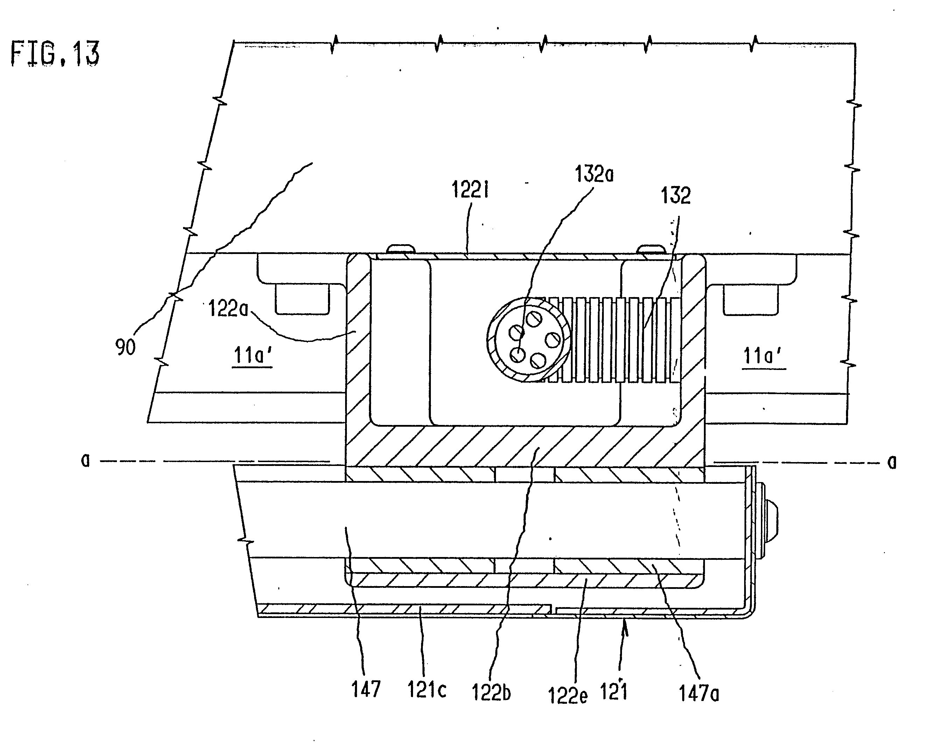

Fig. 13 einen Schnitt nach Linie XIII-XIII von Fig. 12.

Die Spritzgießmaschine weist eine horizontal - schließende Formschließeinheit 17 und eine Spritzgießeinheit 117 auf einem quaderförmigen Maschinenfuß 11 mit rechteckiger Stellfläche M auf. Die Spritzgießeinheit 117 ist bei horizontaler Spritzachse x-x seines Plastifizierzylinders 52 auf die in der Formschließeinheit 17 festspannbare Spritzgießform S auf-bzw. absetzbar und dabei mittels eines Trägerblockes 117a auf stationären horizontalen Säulen geführt. Eine Schutzabdeckung * von rechteckigem Querschnitt umschließt die Spritzgießeinheit im Bereich ihrer Antriebsaggregate. Die Antriebseinrichtung für den bewegbaren Formträger 28 ist von stationären Schutzabdeckungen 17" abgedeckt, unter welche Schutzschieber 17' einschiebbar sind, welche die Formschließeinheit 17 im übrigen, nämlich bis zum stationären Formträger 12 (Fig. 34) abdecken.

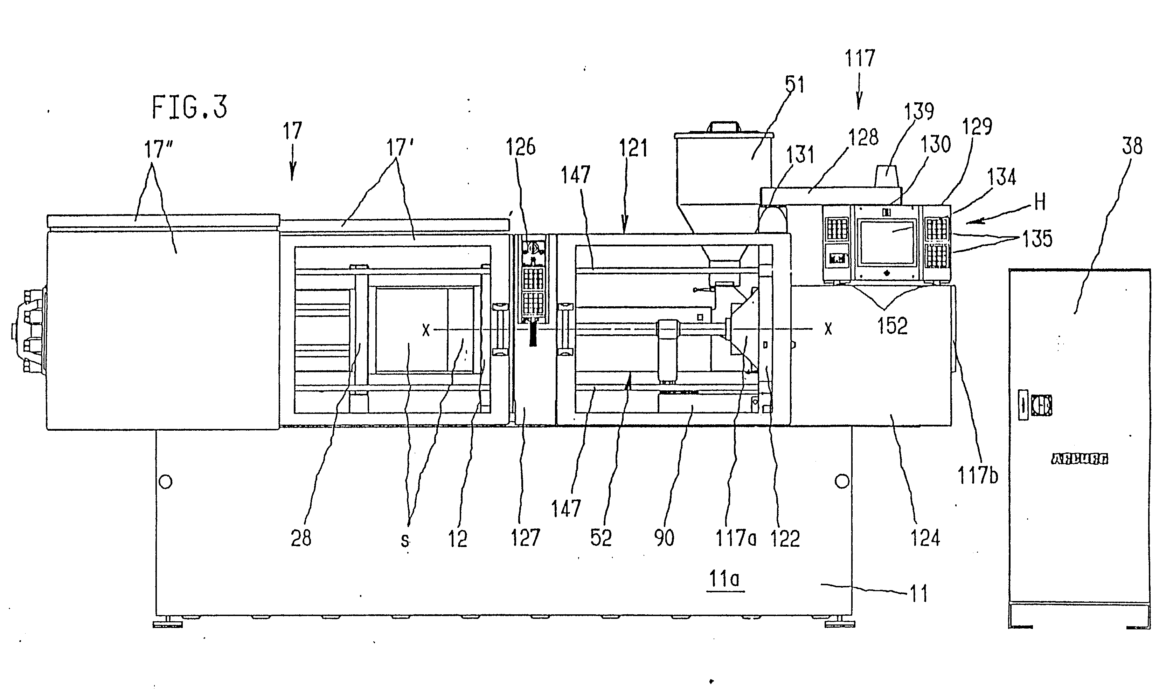

Wie insbesondere aus den Fign. 3-5 in Verbindung mit den Fign. 1,2 ersichtlich, ist das Datensichtgerät H mittels eines horizontalen Schwenkarmes 128 aus einer in einem Bedienungsbereich E liegenden Gebrauchsposition in eine innerhalb der Stellfläche M der Spritzgießmaschine befindliche Ruheposition einschwenkbar und umgekehrt. Der Schwenkarm 128 ist auf einer Trägersäule 122 - schwenkbar gelagert, die auf einem in die Horizontale gebogenen oberen Rand 11a der bedienungsseitigen, vertikalen Wand 11a des aus Stahlblech gefertigten quaderförmigen Maschinenfußes abgestützt ist (Fig. 4,5,13).

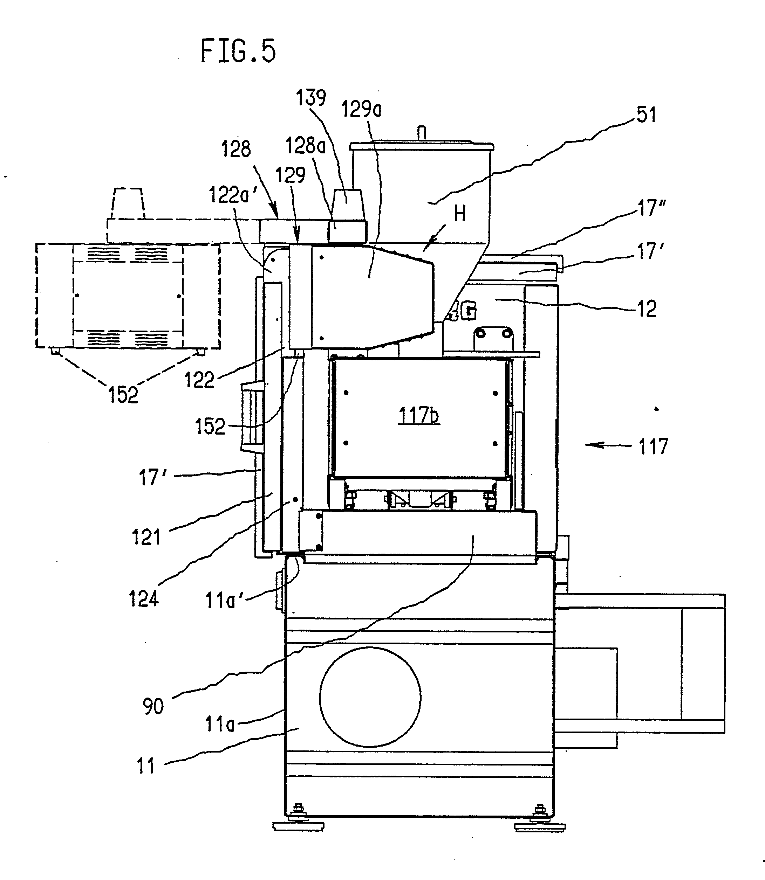

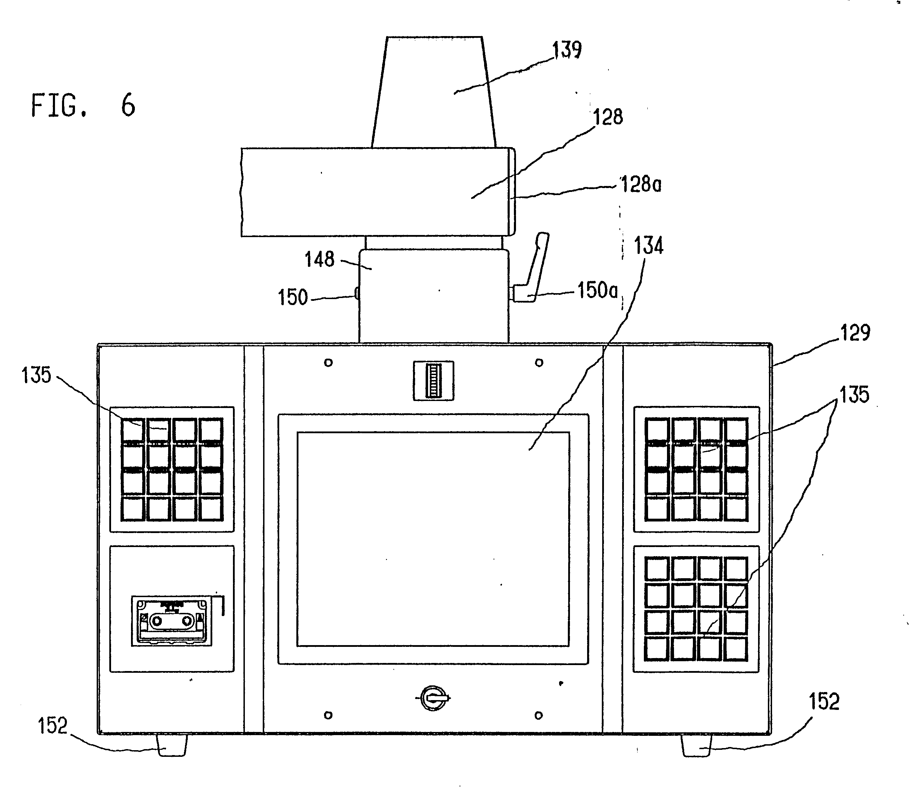

Aus den Fign. 3-5 in Verbindung mit den Fign. 1,2 ist weiterhin erkennbar, daß das Datensichtgerät in Ruhestellung mit einem die zugehörige Elektronik enthaltenden Gehäuse 129a die horizontale Wand die Schutzabdeckung 117b übergreift. Der von seitlichen Eingabetastaturen 135 flankierte Bildschirm 134 des Datensichtgerätes H ist in einem rechteckigen Rahmen 129 angeordnet, wie insbesondere aus Fig. 6 erkennbar. Die Höhe dieses Rahmens 129 entspricht etwa der Höhe des Gehäuses 129a (Fig.5,6). Das Datensichtgerät H ist über ein Drehlager 130 mit dem Schwenkarm 128 verbunden, wie insbesondere aus den Fign. 3-9 erkennbar. Das Drehlager 130 umfaßt einen Lagerring 130a des Schwenkarmes 128 und eine am Lagerring 130 befestigte Anschlagscheibe 130e sowie ein Dämpfungselement 130c. Die Befestigungsschrauben sind mit 130b und 130f bezeichnet. Im Ausführungsbeispiel der Fign. 3-8 ist die obere Wandung des die Elektronik enthaltenden Gehäuses 129a unmittelbar über das Dämpfungselement 130c (Fig.8,9) auf der Anschlagscheibe 130e (Fig. 8,9) drehbar abgestützt. In Fig. 7a, 8a, 9 ist eine Dreh-Schwenk-Verbindung des Datensichtgerätes mit dem Schwenkarm dargestellt, bei welcher zwischen der oberen Wandung des Gehäuses 129a und dem Drehlager 130 eine Schwenkeinrichtung eingefügt ist, die es ermöglicht, das mittels des Drehlagers 130 drehbare Datensichtgerät H auf einem parallel zur Frontwand des Datensichtgerätes H verlaufenden Achsbolzen 150 begrenzt zu verschwenken. Die Schwenkeinrichtung umfaßt ein Schwenklagerstück 149, mit dessen Hilfe das Datensichtgerät H auf

dem Achsbolzen 150 gelagert ist. Letztere ist in einem Lagerstück 148 aufgenommen, das das Dämpfungselement 130c des Drehlagers 130 hintergreift.

Das Datensichtgerät H ist, wie aus den Figuren 6, 7a erkennbar, mittels eines Spannhebels 150a in der jeweiligen Schwenkposition dadurch arretiert, daß das Lagerstück 148 mit dem Schwenklagerstück 149 verklemmt ist. Die Drehung des Datensichtgerätes H ist durch eine aus der oberen Wandung des Gehäuses 129a (Beispiel der Fign. 3-8) oder aus der oberen Wandung des Lagerstückes 148 (Fig. 7a, 8a, 9) ausgestanzte und abgebogene Zunge 133 in Fig. 7, 8 bzw. 133 a in Fig. 7a, 8a, 9 begrenzt. Diese Zunge arbeitet mit Anschlagkanten 130h der Anschlagscheibe 130e zusammen. Die zum Datensichtgerät H führenden Versorgungsleitungen 132a sind in einem Schutzschlauch 132 untergebracht, die in der Trägersäule 122 und im Schwenkarm 128 verlegt sind. Die im Schwenkarm 128 horizontal verlaufenden Versorgungsleitungen sind am Übergang zum Datensichtgerät in einem Winkelstück 132b umgelenkt, wie insbesondere aus Fig. 8, 8a ersichtlich. Wie aus den Fign.10-12 ersichtlich, ist das Rohrprofil des Schwenkarmes 128 stirnseitig mit einer Abdeckung 128a versehen. Eine Signallampe 139 ist koaxial zum Drehlager 130 auf den Schwenkarm 128 aufgesetzt. Die Schenkel 122a des mit Deckblech 122i (Fig.13) abgeschlossenen Profils der Trägersäule 122 sind mit Podest 90 (Fig. 5,13) des Maschinenfußes 11 verschraubt.

Die ein U-Profil aufweisende Trägersäule 122 weist einen eine Schutztüre 121 übergreifenden Endabschnitt 122' von größerem Querschnitt auf (Fig. 11,12). In diesem Endabschnitt 122' ist ein Drehlager 131 für den Schwenkarm 128 sowie eine Einrichtung L angeordnet, durch welche die parallel zur Spritzachse x-x verfahrbare Schutztüre 121 verriegelbar ist. Die Einrichtung L ist derart ausgelegt, daß eine Verriegelung erfolgt, wenn sich das Datensichtgerät H in der Bewegungsbahn der Schutztüre 121 befindet. Wie insbesondere aus Fig. 12 ersichtlich, liegen die Frontfläche der Trägersäule 122 im Endabschnitt 122' und die Frontfläche der Schutztüre 121 in einer gemeinsamen vertikalen Ebene. Die übrige Frontfläche der Trägersäule 122 liegt in der vertikalen Ebene a-a (Fig.4,12) der bedienungsseitigen Wand 11a des Maschinenfußes 11 (Fig. 4-5). Die mit der Schutztüre 121 starr verbundenen Führungssäulen 147 gleiten in Gleitbuchsen 147a, die in Anformungen 122e des Steges 122b aufgenommen sind (Fign. 12,13). Die aus Stahlblech gebildete Schutztüre ist auf ihrer Frontfläche mit einem Sichtfenster 121c versehen. Die stationären

*(117b in Fig. 3-5)

Führungssäulen 147 befinden sich im Abstand voneinander, so daß sich eine sichere Führung der Schutztüre 121 ergibt (Fig.3,12). Diese grenzt in Schließposition an eine in der Ebene a-a (Fig. 4,13) liegendes stationäres Trägerblech 127 für eine Bedienungstastatur 126 an, wie aus den Fign. 3,4 erkennbar.

Das den Endabschnitt 122' bildende U-Profil umfaßt den Steg 122b' und die Schenkel 122a'. Am oberen Ende dieses Steges und dieser Schenkel ist ein innerer Lagerflansch 122d mit horizontalen Gleitflächen 122d' angeformt. auf diesen ist der Schwenkarm 128 mittels eines an ihm befestigten Lagerringes 131a an einer an diesem Lagerring befestigten Steuerscheibe 131c drehbar gelagert. Ein Radialflansch des Lagerringes 131a liegt an der oberen Gleitfläche 122d' und die Steuerscheibe 131c an der unteren Gleitfläche 122d' drehbar an, wie insbesondere aus Fig. 12 erkennbar. Die Schenkel 122a' sind von einer Friktionsschraube 155 durchsetzt. Mit ihrer Hilfe können diese Schenkel 122a' unter Vorspannung gesetzt werden. Durch die Vorspannung wird die innere, kreisförmige vertikale Gleitfläche 122d'' (Fig. 12) des Lagerflansches 122d mit der korrespondierenden Gleitfläche des Lagerringes 131a verspannt und dadurch der Schwenkarm 128 in dem eingestellten Schwenklager drehbar unter Friktion gehemmt. In den Schenkeln 122a' ist in der Nähe des Steges 122b' eine Achse 143 gelagert (Fig.11,12). Auf dieser Achse 143 ist in der Symmetrieebene des Trägerarms 122 ein Verriegelungshebel 142 der Einrichtung L verschwenkbar angeordnet. Der Verriegelungshebel 142 ist mit Hilfe eines am Umfang der Steuerscheibe 131c angeordneten Steuerprofils steuerbar.

Der Verriegelungshebel 142 liegt mit seinem oberen Arm 142a unter der Wirkung einer Feder 145 stirnseitig an dem Steuerprofil an. Die Feder 145 ist in einer vertikalen Bohrung des Steges angeordnet und greift mittels eines Stückes 144 am Arm 142a an. Befindet sich die Anlagekante des Verriegelungshebels im Abschnitt 131f (Fig. 10) in Anlage, wie dies in den Figuren 10, 12 der Fall ist, so hintergreift das freie Ende 142b des Verriegelungshebels 142 einen aus dem Rand 121a der Schutztür 121 rechtwinklig herausgebogenen Lappen 121b. In der Schwenkstellung gemäß den Figuren 6, 10 bis 12 verläuft der Schwenkarm parallel zur vertikalen, bedienungsseitigen Wand 11a des Maschinenfußes 11 bzw. zur Spritzachse x-x. Wird ausgehend von dieser Schwenkstellung der Schwenkarm 128 in der einen oder anderen Richtung gedreht, um das Datensichtgerät (H) in Gebrauchsstellung oder in Ruhestellung zu überführen, so läuft die Stirnkante des Hebelarmes 142a auf die Steuerkante 131e bzw. 131g auf. Die genannten Steuerkanten schließen zur Radialen einen Winkel von etwa 45° ein. Durch das Auflaufen wird der Verriegelungshebel 142 aus der Verriegelungsposition gemäß Fig. 12 (ausgezogene Linienführung) in eine Entriegelungsstellung überführt, die in Fig. 12 durch gestrichelte Linienführung angedeutet ist, bevor er auf eine der Anschlagkanten 131d bzw. 131i aufläuft. An der Anschlagkante 131d liegt der Hebelarm 142a bei in Ruhestellung befindlichem und an der Anschlagkante 131i, bei in Gebrauchsstellung befindlichem Datensichtgerät an. Beide Extrempositionen sind aus Fig.4,5 erkennbar. Der Lagerflansch 122d ist nicht zu einem vollständigen Kreis geschlossen, sondern läßt einen radialen Schlitz mit der lichten Weite z (Fig. 10) offen, durch welchen bei der Montage der Schutzschlauch 132 in die Trägersäule 122 eingeführt werden kann. Der Lagerring 131a ist mittels Befestigungsschrauben 131b am Schwenkarm 128 und die Steuerscheibe 131c mittels Befestigungsschrauben 131k am Lagerring 131a befestigt.

An der Trägersäule 122 ist ein in der Ebene a-a der vertikalen Wand 11a des Maschinenfußes 11 angeordnete Schutzabdeckung 124 befestigt. Dieses erstreckt sich bis in die Höhe des in Ruhestellung befindlichen Datensichtgerätes H, das auf dieser Schutzabdeckung 124 abstützbar ist. Zu diesem Zweck liegen am Gehäuse 129a unten angeordnete Gummipuffer 152 auf einem rechtwinklig abgebogenen oberen Rand der Schutzabdeckung124 auf.

In den Spritzanlagen gemäß den Fign. 1 und 2 sind die Spritzgießmaschinen beidseits einer linearen Bahn 45 stirnseitig aneinandergereiht. Die Spritzanlage umfaßt zudem ein Gießformdepot 44, einen Rolltisch 49 für den Abtransport von Spritzgießformen S sowie eine Station 50 für den Abtransport von mit Spritzlingen gefüllten Sammelbehältern. Auf der linearen Bahn 45 ist ein die Spritzgießformen S und gegebenenfalls Plastifizierzylinder 52 und Spritzteilen transportierendes Schienenfahrzeug 27 verfahrbar. Das Schienenfahrzeug 27 ist am Gießformdepot 44 sowie an den Spritzgießmaschinen wechselweise in Anschlußpositionen zur Übergabe oder Übernahme der Spritzgießform S bzw. des Plastifizierzylinders 52 oder der Spritzteile verfahrbar. Die Spritzgießmaschinen sind mit Bezug auf ihre Spritzachsen x-x parallel und in einem je die Anschlußpositionen ermöglichenden Abstand von der Bahn 45 angeordnet. Die auf der einen Seite der Bahn 45 befindlichen Spritzgießmaschinen sind spiegelsymmetrisch zu den auf der anderen Seite befindlichen Spritzgießmaschinen angeordnet. Somit sind die Rückseiten r aller Spritzgießmaschinen der Bahn zugewandt. Sind die Spritzgießmaschinen von unterschiedlicher Größe, weisen ihre Bedienungsseiten b je einen unterschiedlichen Abstand zur Bahn 45 auf. Die bedienungsseitigen vertikalen Wände 11a der Maschinenfüße 11 der Spritzgießmaschinen ergeben zusammen mit den auf ihnen angeordneten Schutzabdeckungen 124, 17″ und Schutztüren 17′ sowie 121 (Fig. 3-5) eine in den Schematas der Figuren 1, 2 durch Schraffur kenntlich gemachte Abgrenzung der Bedienungsbereiche E von einer Gefahrenzone D. In letzterer sind die Spritzgießmaschinen und die Bahn 45 eingeschlossen. Im Falle zweier nebeneinander angeordneter Fertigungsanlagen (Fig. 1) ist die mittlere Bedienungsstrasse E′ beidseits von den Gefahrenzonen D durch die bedienungsseitigen vertikalen Wände 11a und die zwischen den Stirnseiten der Spritzgießmaschine angeordneten Schaltschränke 38 abgegrenzt. Die in den Figuren 1 und 2 erkennbaren Gießformwechseleinrichtungen, die aus den älteren Patentanmeldungen P 36 17 094.1-16 und P 36 26 488.1 bekannt sind, sollen im folgenden nur kurz angesprochen werden. In den Fertigungsanlagen gemäß Fig. 1 ist an der Rückseite jeder Spritzgießmaschine ein Wechseltisch 19 derart parallel zur Spritzachse x-x etwa um eine Gießformtiefe verfahrbar, daß seine Gießformführung G′ (Fig. 1) wechselweise mit einer Gießformführung G im Formspannraum F eine Wechselbahn bilden kann. Diese Gießformführung G′ des Wechseltisches 19 kann überdies mit einer Gießformführung G″ des in Anschlußposition verfahrbaren Schienenfahrzeuges 27 eine Transportbahn zur Übernahme einer Spritzgießform S vom Wechseltisch 19 auf das Schienenfahrzeug 27 und umgekehrt bilden. Darüber hinaus kann die Gießformführung G″ des in Anschlußposition an das Gießformdepot 44 gefahrenen Schienenfahrzeuges 27 mit der Gießformführung eines Stellplatzes 44a eine Transportbahn zur Übernahme einer Spritzgießform S aus dem Stellplatz 44a auf das Schienenfahrzeug und umgekehrt bilden. Das gleiche gilt für den Fall des Transportes von Plastifizierzylindern 52. Die Gießformführung G″ und eine Gießformverschiebevorrichtung sind auf einer Lagerplatte des Schienenfahrzeuges 27 drehbar gelagert, so daß es wahlweise an eine Spritzgießmaschine auf der einen oder anderen Seite der Bahn 45 in Anschlußposition verfahrbar ist. Im Beispiel der Fertigungsanlage gemäß Fig. 2 dient das Schienenfahrzeug 27 zugleich als Wechseltisch mit zwei Stellplätzen, die auf einer drehbaren Trägerplatte ausgebildet sind. Die genannten Stellplätze sind wahlweise mit Spritzgießformen S oder Plastifizierzylinder 52 belegbar. Die Gießformführungen G″ des Schienenfahrzeuges 27′ können wahlweise mit den Gießformführungen G der Formenspannräume F oder mit Führungen $G^{IV}$ für Plastifizierzylinder 52 oder mit den Gießformführungen G‴ der Stellplätze 44a des Gießformdepots 44 Transportbahnen zur Überführung von Spritzgießformen S oder von Plastifizierzylindern 52 bilden.

In der Gruppierung gemäß Fig. 1 linke Hälfte befindet sich das Schienenfahrzeug 27 (ausgezogene Linienführung) in Anschlußposition an einem Wechseltisch 19 einer dem Gießformdepot 44 benachbarten Spritzgießmaschine. Von diesem Wechseltisch wurde gerade eine Spritzgießform S in den Formspannraum dieser Spritzgießmaschine überführt und befindet sich in Arbeitsposition. Die ausgewechselte Spritzgießform wird gerade vom zweiten Stellplatz des Wechseltisches 19 auf das Transportfahrzeug überführt und zwar auf einer Transportbahn, die von der Gießformführung G′ des Wechseltisches und der Gießformführung G″ des Transportfahrzeuges gebildet ist. In der Gruppierung der Spritzgießmaschinen gemäß Fig. 1 links ist oben die Position des Transportfahrzeuges 27 angedeutet, wenn dieses sich in Anschlußposition an einem Depotstellplatz 44a befindet. In der Gruppierung der Spritzgießmaschinen gemäß Fig. 1 rechte Hälfte befindet sich das Transportfahrzeug 27 in Anschlußposition an einem Depotstellplatz 44a, wobei seine Gießformführung G″ mit der Gießformführung G‴ dieses Depotstellplatzes 44a eine Transportbahn bildet. Die auf dem Transportfahrzeug 27 befindliche Spritzgießform startet gerade zur Überführung in den Depotstellplatz 44a. Unten in der Gruppierung ist das Transportfahrzeug 27 durch gestrichelte Linienführung in einer Anschlußposition zum Wechseltisch angedeutet. Die neue Spritzgießform ist bereits in den Formspannraum F eingewechselt. Die abzutransportierende Spritzgießform steht vor der Überführung vom zweiten Stellplatz des Wechseltisches 19 auf das Transportfahrzeug 27. Die Datensichtgeräte beider Spritzgießanlagen befinden sich teilweise in Gebrauchsposition und teilweise in Ruheposition. An einigen Spritzgießmaschinen ist der Arbeitsplatz der Bedienungsperson mit einem "P" angedeutet. Um die spiegelsymmetrische Anordnung der Spritzgießmaschinen zur Bahn 45 kenntlich zu machen, sind die Granulatbehälter 51 der Spritzgießmaschinen angedeutet.

In der Spritzgießanlage gemäß Fig. 2 ist das Transportfahrzeug 27′ zugleich als Wechseltisch mit zwei Stellplätzen ausgebildet. Das Transportfahrzeug ist zum Wechsel des Plastifizierzylinders 52 in eine Anschlußposition an die Gießformführung G $^{IV}$ an eine Spritzgießmaschine gefahren. Der Plastifizierzylinder wird gerade von der Spritzgießmaschine über die Führung $G^{IV}$ auf die Gießformführung des benachbarten Stellplatzes des Transportfahrzeuges 27′ überführt. Nach vollzogener Überführung wird die Trägerplatte des Transportfahrzeuges 27 gedreht, wie in Fig. 2 durch gestrichelte Linienführung angedeutet, so daß der auf dem anderen Stellplatz des Transportfahrzeuges befindliche, vom Depot 44 herbeigeführte Plastifizierzylinder 52' in die Spritzgießmaschine eingewechselt werden kann. In Fig. 2 oben ist die Position des Transportfahrzeuges 27' angedeutet, wenn es sich in Anschlußposition am Gießformdepot 44 befindet, das auch Plastifizierzylinder 52 aufnehmen kann. Mit y-y ist die Symmetrieachse der Spritzgießanlage angedeutet.

Jeder Spritzgießmaschine der in den Schematas der Figuren 1 und 2 gezeigten Spritzgießanlagen ist ein den zugehörigen Computer aufnehmender Schaltschrank 38 zugeordnet. Diese Schaltschränke 38 sind je an den Stirnseiten der Maschinenstellflächen M positioniert. Dadurch ergibt sich eine noch bessere Abschirmung der entsprechend der Länge der Bahn 45 zu einer gefahrlosen und relativ freien Bedienungsstraße E' zusammengefaßten Bedienungsbereiche E (Fig. 4) gegenüber dem Gefahrenbereich D. Durch diese Abschirmung ist ein zufälliges oder vorschriftswidriges Überwechseln einer Bedienungsperson aus der Bedienungsstraße E' in den Gefahrenbereich D wesentlich erschwert. Vorschriftswidrige Eingriffe in die im Betrieb befindlichen Spritzgießeinheiten 117 bzw. Formschließeinheiten 17 (Fig. 2 unten links) sind durch die Schutzabdeckungen 17", 124 und die Schutztüren 17' und 121 verhindert. Dabei ist zu beachten, daß dank einer entsprechenden Ausbildung des Steuerprofils der Steuerscheibe 131c die Schutztüre 121 zwar aus ihrer Schließposition verfahren werden kann, wenn sich das Datensichtgerät H nicht in der Bewegungsbahn der Schutztüre befindet. In diesem Falle wird aber beim Öffnen der Schutztüre durch andere Sicherheitseinrichtungen der Betrieb der Spritzgießmaschine stillgelegt, sobald die Schutztüre wenige Zentimeter aus ihrer Schließposition gefahren ist.

**Ansprüche**

1. Kunststoff-Spritzgießmaschine (Spritzgießmaschine) mit einem eine etwa rechteckige Stellfläche (M) beanspruchenden, etwa quaderförmigen Maschinenfuß (11), auf welchem eine horizontal schließende Formschließeinheit (17) und eine Spritzgießeinheit (117) mit einem den Plastifizierzylinder (52) und die Antriebsaggregate aufnehmenden Trägerblock (117a) angeordnet sind, sowie mit einem vom Computer der Spritzgießmaschine räumlich getrennten Datensichtgerät (H) mit zugehörigen Eingabetastaturen (135), die von dem in einem Bedienungsbereich (E) der Spritzgießmaschine befindlichen Bedienungsplatzzugänglich sind, welcher Bedienungsbereich (E) von einem die Spritzgießform umfassenden Gefahrenbereich (Stellfläche M) durch die bedienungsseitige vertikale Wand (11a) des Maschinenfußes (11) und wenigstens einen auf dieser Wand (11a) angeordneten, vertikalen Schutzschieber (17') abgegrenzt ist, dadurch gekennzeichnet, daß auf der bedienungsseitigen Wand (11a) des Maschinenfußes (11) im Bereich des Trägerblockes (117a) eine vertikale Trägersäule (122) für eine die Spritzgießeinheit (117) düsenseitig abschirmende Schutztüre (121) sowie für einen das Datensichtgerät (H) drehbar tragenden Schwenkarm (128) angeordnet und abgestützt ist, daß die in Gleitlagern (Ausformungen 122e in Fig.3;12) der Trägersäule (122) verfahrbare Schutztüre (121) in Schließposition an eine stationäre, an den Schutzschieber (17') angrenzende Bedienungstastatur (126) für direkte Steuerungseingriffe angrenzt, und daß das Datensichtgerät (H) aus einer im Bedienungsbereich (E) befindlichen Gebrauchsposition in die Stellfläche (M) in eine Ruheposition einschwenkbar ist.

2. Spritzgießmaschine nach Patentanspruch 1, dadurch gekennzeichnet, daß das Datensichtgerät (H) in Ruheposition mit einem die zugehörige Elektronik enthaltenden Gehäuse (129a) die horizontale Wand einer die Antriebsaggregate der Spritzgießeinheit (11) umschließende Schutzabdeckung (117b) übergreift und daß der frontseitige, von seitlichen Eingabetastaturen (135) flankierte Bildschirm (134) des Datensichtgerätes (H) in einem rechteckigen Rahmen (129) angeordnet ist, dessen Höhe etwa der Höhe des Gehäuses (129a) entspricht (Fig. 1-3).

3. Spritzgießmaschine nach Patentanspruch 1 oder 2, dadurch gekennzeichnet, daß die ein U-Profil aufweisende Trägersäule (122) einen die Schutztüre (121) übergreifenden Endabschnitt (122') von größerem Querschnitt aufweist, in welchem ein Drehlager (131) für den Schwenkarm (128) sowie eine Einrichtung (L) angeordnet ist, durch welche die parallel zur Spritzachse (x-x) verfahrbare Schutztüre (121) verriegelbar ist, wenn sich das Datensichtgerät (H) in ihrer Bewegungsbahn befindet, wobei die Frontfläche der Trägersäule (122) im Endabschnitt (122') und die Frontfläche der Schutztüre (121) in einer gemeinsamen vertikalen Ebene liegen und die übrige Frontfläche der Trägersäule (122) in der vertikalen Ebene (a-a in Fig. 4) der bedienungsseitigen Wand (11a) des Maschinenfußes (11) liegt (Fig. 4,5,12,13).

4. Spritzgießmaschine nach Patentanspruch 3, dadurch gekennzeichnet, daß am Steg (122b') und an den Schenkeln (122a') des den Endabschnitt (122') der Trägersäule (122) bildenden U-Profils ein innerer Lagerflansch (122d) mit horizontalen

Gleitflächen (122d') angeformt ist, auf welchem der Schwenkarm (128) mittels eines an ihm befestigten Lagerringes (131a) und einer an diesem Lagerring (131a) befestigten Steuerscheibe (131c) drehbar gelagert ist, wobei ein Radialflansch des Lagerringes (131a) an einer oberen Gleitfläche des Lagerflansches (122d) und die Steuerscheibe (131c) an einer unteren Gleitfläche des Lagerflansches (122d) drehbar anliegt (Fig. 10,12).

5. Spritzgießmaschine nach Patentanspruch 4, dadurch gekennzeichnet, daß die Schenkel (122a') von einer Friktionsschraube (155) durchsetzt sind und mittels dieser Friktionsschraube unter Vorspannung setzbar sind, durch welche die kreisförmigen Gleitfläche (122d") des Lagerflansches (122d) zur friktionsbedingten Hemmung des Schwenkarmes (128) mit dem Lagerring (131a) verspannbar ist.

6. Spritzgießmaschine nach einem der vorhergehenden Patentansprüche, dadurch gekennzeichnet, daß sich ein in der Ebene (a-a) der vertikalen Wand (11a) des Maschinenfußes (11) an der Trägersäule (122) befestigte stationäre Schutzabdeckung (124) sich bis in die Höhe des in Ruhestellung befindlichen Datensichtgerätes (H) erstreckt, das auf dieser Schutzabdeckung (124) abstützbar ist (Fig. 3-5).

7. Spritzgießmaschine nach einem der vorhergehenden Patentansprüche, dadurch gekennzeichnet, daß das Datensichtgerät (H) über ein Drehlager (130) mit dem Schwenkarm (128) verbunden ist, welches Drehlager (130) einen Lagerring (130a) des Schwenkarmes (128) und einen am Lagerring (130a) befestigten Anschlagring (130e) umfaßt, wobei die obere Wandung des Gehäuses (129a) des Datensichtgerätes (H) über Dämpfungselement (130c) auf der Anschlagscheibe (130e) begrenzt abgestützt ist (Fig. 3-5 in Verbindung mit Fig. 6-9).

8. Spritzgießmaschine nach einem der vorhergehenden Patentansprüche, dadurch gekennzeichnet, daß das Datensichtgerät (H) um einen parallel zu seiner Frontfläche und zum Schwenkarm (128) verlaufenden Achsbolzen (150) begrenzt verschwenkbar und in der verschwenkten Stellung arretierbar ist (Fig. 6,8,9).

9. Zu einer Spritzgießmaschine gruppierte Spritzgießmaschinen, je ausgebildet nach einem der Patentansprüche 1-8, dadurch gekennzeichnet, daß die Spritzgießanlage ein Gießformdepot (44), eine gemeinsame Gießformwechseleinrichtung und ein die Spritzgießformen (S) vom und zum Gießformdepot (44) transportierendes Schienenfahrzeug (27) umfaßt, das auf einer geradlinigen Bahn (45) am Gießformdepot (44) sowie an den Spritzgießmaschinen wechselweise in Anschlußpositionen zur Übergabe oder Übernahme einer Spritzgießform (S) verfahrbar ist, wobei die Spritzgießmaschinen mit bezug auf ihre Spritzachsen (x-x) parallel und in einem je die Anschlußposition ermöglichenden Abstand von der Bahn (45) derart angeordnet sind, daß die auf der einen Seite der Bahn (45) befindlichen Spritzgießmaschinen spiegelsymmetrisch zu denjenigen auf der anderen Seite liegen, wobei die bedienungsseitigen, vertikalen Wände (11a) und die zugehörigen Schutzschieber (17') und Schutztüren (221) eine gefahrlose Bedienungsstraße (E') gegenüber einem die Spritzgießmaschinen und die Bahn (45) einschließenden Gefahrenbereich (D) abgrenzen (Fig. 1,2).

10. Spritzgießanlage nach Patentanspruch 9, dadurch gekennzeichnet, daß die die Computer der Spritzgießmaschinen aufnehmenden Schaltschränke (38) zwischen den Stirnseiten der Spritzgießmaschinen angeordnet sind und mit ihren Frontseiten an der Abgrenzung der Bedienungsstraßen (E') zum Gefahrenbereich (D) teilhaben.

FIG. 1

0 264 601

# FIG. 2

FIG.3

FIG. 4

## FIG.5

FIG. 6

## FIG.7

130b  130e  129

129

130h

132

133

128  130h

132a

130f

## FIG.8

139

128

132

132b

130b

130a

130

133

130c

132a  130f  130e

A

**FIG.7a**

150
150a

130e
148
149
130h
132a
133a
130f
130b
150
128
132

**FIG.8a**

139
128
132b
130b
130a
130
148
132a
130c
149
133a
150
130e
130f
VII
VII
129a

**FIG.9**

FIG.10

FIG.11

FIG.12

FIG.13

0 264 601